(19) Europäisches Patentamt
European Patent Office
Office européen des brevets

(11) **EP 4 160 947 A1**

(12) **EUROPEAN PATENT APPLICATION**

(43) Date of publication:
**05.04.2023 Bulletin 2023/14**

(21) Application number: **21200036.8**

(22) Date of filing: **30.09.2021**

(51) International Patent Classification (IPC):
*H04J 3/06* (2006.01)    *H04L 12/46* (2006.01)
*H04L 47/28* (2022.01)

(52) Cooperative Patent Classification (CPC):
**H04J 3/0673;** H04J 3/0667; H04L 47/28

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventor: **Striffler, Tobias 81669 München (DE)**

(74) Representative: **Siemens Patent Attorneys Postfach 22 16 34 80506 München (DE)**

(54) **DETERMINING A RESIDENCE TIME IN A PORTION OF A NETWORK**

(57)     Embodiments disclosed herein relate to a method for determining a residence time of a synchronization message according to a precision time protocol or PTP wherein the synchronization message is transmitted through a section or portion of a network. While transparent clocks are usually regarded as monolithic devices, a residence time in accordance with the techniques of this disclosure may be determined as a time for traversing devices or nodes distributed within a network or within a portion of a network. An implementation of the present embodiments is particularly advantageous for 5G wireless communication network having TSN capabilities or, in other words, operating as a 5G-TSN integrated network.

FIG 3

EP 4 160 947 A1

**Description**

TECHNICAL FIELD

The present embodiments relate to a method for determining a residence time in a portion of a network. Specifically, the embodiments relate to a method for determining a residence time of a synchronization message according to a precision time protocol wherein the synchronization message is transmitted through a section or portion of a network.
In a network such as a packet-switched communication network, a master node may send to one or more slave nodes synchronization information formatted according to a synchronization protocol. In particular, the master node typically generates synchronization information related to its local clock (frequency and/or time of the day) and sends this information to the slave nodes within synchronization packets. Once the synchronization information is received at the slave nodes, it allows the slave nodes to synchronize the frequency and/or the time of the day of their respective clocks to those of the master node local clock.
An example of known synchronization protocols is the IEEE 1588 protocol, known as »Precision Time Protocol«, PTP, and currently revised in a draft version D1.6 laid open in a draft document entitled »Draft Standard for a Precision Clock Synchronization Protocol for Networked Measurement and Control Systems«, edited by the IEEE Instrumentation and Measurements Society on August, 2019.
According to the Precision Time Protocol, a transparent clock is specified as a network node or device forwarding a PTP synchronization message and updating the synchronization message with a time span spent in the transparent clock. Said time span is known as a residence time. Residence time may also be referred to as latency or delay.
While transparent clocks are usually regarded as monolithic devices, a residence time in accordance with the techniques of this disclosure may also be determined as a time for traversing devices or nodes distributed within a network or within a portion of a network.

SUMMARY

Embodiments herein generally involve a method for determining a residence time of a synchronization message traversing a portion of a network.
In one embodiment, the synchronization message is received by an ingress node which may be located at one edge of said portion of the network, forwarded to one or more intermediary nodes inside the portion of the network, and eventually received by an egress node which may be located at one other edge of said portion of the network.
In one embodiment, the reception of a synchronization message includes an amendment of the synchronization message. The synchronization message may be amended by timestamps which may be added to one or more fields of the synchronization message. Further on, the synchronization message may be amended in one or more fields of the synchronization message which are sometimes referred to as correction fields.
In one embodiment, a node receiving the synchronization message may generate a timestamp. The node receiving the synchronization message may further amend the synchronization message and forward the synchronization message to one or more nodes.
In one embodiment, a determination of the residence time may include a determination of an approximated residence time prior to calculating an adjusted residence time therefrom with an additional consideration of two correction factors.
The first correction factor may be a ratio of a master clock frequency and a clock frequency measured at the ingress node. Advantageously, the first correction factor may be derived from a parameter currently applied in the present IEEE 1588 protocol (refer to chapter 6.6.6.2 of the draft document D1.6 entitled »Draft Standard for a Precision Clock Synchronization Protocol for Networked Measurement and Control Systems«, edited by the IEEE Instrumentation and Measurements Society on August, 2019) which is referred to there as »cumulativeRateRatio«.
The second correction factor may be a ratio of a clock frequency measured at the ingress node and a clock frequency measured at the egress node. Determining the adjusted residence time may include a calculation of a product of the approximate residence time, the first correction factor, and the second correction factor. The approximated residence time equals the adjusted residence time when both correction factors are one, i.e. the neutral element of multiplication.
A particular advantage of the present embodiments is a generalization of a transparent clock being embodied by a plurality of nodes within a portion of a network.
Another particular advantage of the present embodiments lies in a reduction or elimination of offset errors produced by time adjustments of local clocks that are each assigned to a respective node.
Another particular advantage of the present embodiments is that no additional information has to be transferred between the nodes or between a node and a master clock. The adjustments are achieved using data which is already present at the respective node. Implementations of the present embodiments may therefore be included in standardized methods or provided in parallel or in addition to standardized methods.

## DESCRIPTION OF THE DRAWING

The objects as well as further advantages of the present embodiments will become more apparent and readily appreciated from the following description of the preferred embodiments, taken in conjunction with the accompanying drawing in which:

FIG. 1 is a block diagram of a transparent clock being embodied in a monolithic device;

FIG. 2 is a block diagram of a portion of a network functionally forming a transparent clock; and;

FIG. 3 shows clock time drifts of local clocks respectively assigned to an ingress and an egress interface along with a series of time offsets re-synchronizing the clocks.

## DETAILED DESCRIPTION

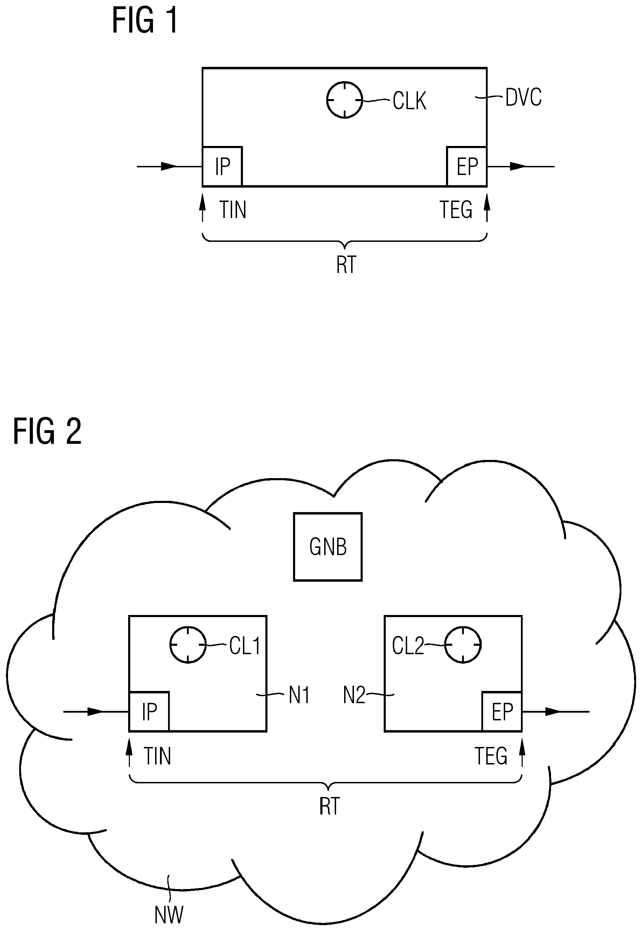

FIG. 1 shows a conventional transparent clock DVC being embodied in a single device having an ingress interface IP and an egress interface EP. The ingress interface IP and the egress interface EP may be implemented as network interfaces or wireless network interfaces. Both, ingress interface IP and egress interface EP, use a device-internal clock signal distributed by a clock CLK integrated within the conventional transparent clock DVC.

The clock signal is generally understood as a physical signal that has periodic events. The periodic events mark the significant instants at which a time counter is incremented. The clock signal is characterized by its frequency and phase.

Synchronization or an act of synchronizing is generally understood as an adjustment of two electronic circuits, devices or nodes so as to operate at the same time. Syntonization or an act of syntonizing is generally understood as an adjustment of two electronic circuits, devices or nodes so as to operate at the same frequency. Hereinafter, synchronization or an act of synchronizing may be construed as synchronization including a syntonization.

A receipt of a synchronization message by the ingress interface IP of the transparent clock DVC is symbolized by an arrow pointing towards the ingress interface IP. At the time of receipt TIN an ingress timestamp is generated by the ingress node IP.

An egress of the synchronization message by the egress interface EP of the transparent clock DVC is symbolized by an arrow leading away from the egress interface EP. At the time of egress TEG an egress timestamp is generated by the ingress node IP.

The determining residence time of the synchronization message is calculated as a difference of the egress timestamp and the ingress timestamp.

FIG. 2 shows a block diagram of a portion of a network functionally forming a transparent clock. Contrasting the implementation of FIG. 1, the embodiment shown in FIG. 2 encompasses at least two nodes, here an ingress node N1 and an egress node N2 according to an exemplary implementation, which, although sharing a common network NW, may be physically separated from each other.

The separation of nodes may particularly mean that each of said nodes N1,N2 has its own clock CL1,CL2. Both clocks CL1,CL2 may be physically separated from each other. The network NW or a portion of the network NW may include both nodes N1,N2.

Alternatively, said nodes N1,N2 may be part of a multinode system with distributed local clocks CL1,CL2. The nodes N1,N2 participating in the multinode system may be connected together through a system interconnect to facilitate communication between the nodes N1,N2. In some applications, the nodes N1,N2 may be divided into physical partitions, or domains, wherein each physical partition is capable of operating as a separate computer.

Keeping consistent time among the nodes N1,N2 in the network NW is a fundamental requirement. The internal clocks CL1, CL2 of the nodes N1,N2 are usually not accurate enough and tend to drift apart from each other over time, generating inconsistent time values. Accordingly, a clock synchronization and/or syntonization may be necessary in regular time intervals.

Clock synchronization in packet-based networks NW has been subject of study for many years. Standards for a synchronization within networks NW include the Network Time Protocol or NTP and the Precision Time Protocol or PTP. The Precision Time Protocol gives superior performance by achieving sub-microsecond or even nanosecond accuracy.

Clock synchronization is particularly essential for time sensitive networks or TSN. Time sensitive networks can be generally defined as networks that may communicate at least some time sensitive data. As such, time sensitive networks need to be capable of communicating time sensitive data within an acceptable amount of time. While many of today's communications networks follow a best-effort approach, a best-effort approach is generally not suitable for time sensitive applications because even minor delays in the transmission and/or delivery of time sensitive content is unacceptable for such applications.

Time sensitive networks are a key challenge in a network infrastructure of flexible industrial production lines. Factories of the future encounter a growing data traffic among industrial devices. Wireless technologies for exchanging data penetrate industrial plant environments due to the advantages that these technologies possess over wired solutions. To that end, ubiquitous wireless network coverage within industrial environments is paramount. Strict real-time communication requirements have to be met irrespective of the underlying technology.

Communication networks have progressed through several different generations of technology and are sometimes referred to by a generation index such as 3G, or 4G for third or fourth generation networks. Access nodes in LTE - or above 4G wireless networks - can include a RAN Node such as a Node B (also commonly denoted as evolved Node B, enhanced Node B, eNodeB, or eNB) and/or Radio Network Controller or RNC. In fifth generation or 5G wireless networks, Access nodes can include a 5G Node, e.g., 5G eNB or gNB. The access nodes communicate with wireless user equipment, which is commonly referred to as user equipment or UE.

Current standardization efforts focus on fifth generation or 5G wireless networks combined with a time sensitivity of the network to form a 5G wireless communication network having TSN capabilities or, in other words, operating as a 5G-TSN integrated network NW. Respective wired communication technologies may complete the wireless capabilities of the 5G wireless communication network to form a hybrid network which is also referred to as converged network.

In order to integrate 5G communication networks and TSN networks, the 5G communication network may act as a TSN Bridge towards the TSN network or may act as a 5G-as-a-TSN Bridge in a 5G-TSN integrated network. For the sake of time synchronization over this TSN Bridge, the 5G network or portion of said 5G network in its entirety should behave like a transparent clock.

There is, however, a critical difference between a typical TSN transparent clock according to the embodiment shown in FIG. 1 and a 5G transparent clock as shown in FIG. 2. While the TSN transparent clock is a single device DVC which means that all its different ethernet ports may use the same physical clock CLK, e.g. for time stamping operations, the TSN Bridge transparent clock according to FIG. 2 has at least two different nodes N1 and N2 act using different physical clocks CL1,CL2. This separation may introduce significant errors into the time synchronization procedure in an integrated 5G-TSN network NW.

According to an advantageous implementation, the network NW shown in FIG. 2 is at least partially operated as a 5G wireless communication network having TSN capabilities or, in other words, operating as a 5G-TSN integrated network NW. The 5G-TSN integrated network NW may include one or more access nodes GNB wirelessly communicating with and/or controlling one or both nodes N1 and N2 acting as user equipment or UE.

Both nodes N1 and N2 acting as UE may be synchronized to a 5G master clock which may be implemented in one or more access nodes GNB. The residence time RT according to the embodiment illustrated in FIG. 2 may be approximately calculated as described for FIG. 1.

In the current application example according to FIG. 2, however, the ingress timestamp TIN is determined using the first clock CL1 of the ingress node N1, and the egress timestamp TEG is determined based on the second clock CL2 of the egress node N2 which means, as already emphasized, that the clocks CL1,CL2 are operating independently.

Although the IEEE 1588 provides a correction factor entitled »cumulativeRateRatio« (see 11.5.3.2.8 of the draft standard document as recited above) or CRR, this correction factor only compensates a frequency error between a master clock or a grandmaster clock and the clock of the ingress node N1, which is the timestamping clock of the PTP instance according to the standard.

The Applicant has proposed a method where the ratio between the clock frequencies of the ingress node N1 and the egress node N2 is included in the residence time calculation to compensate for this error in the European Patent Application 21168513.6 filed on April 15, 2021 and yet unpublished at the time of this application.

The following embodiments address two further error sources for a time synchronization over a portion of a network, e.g., over a 5G-as-a-TSN Bridge in 5G-TSN integrated networks, which are currently not accounted for in the standardized methods:

- A relative clock drift between the ingress node and the egress UE of the portion of the network is currently not accounted for in standardized methods for calculating a residence time within the portion of the network;
- Further on, time jumps of the ingress and egress clocks due to offset corrections in order to synchronize the time of ingress and egress clocks with a reference time of a master clock are similarly unaccounted for.

A general approach according to the embodiments is to calculate ingress timestamps and egress timestamps in a master clock time and compensating both, the node's clock drift and any time jumps due to synchronization procedures, particularly 5G-internal synchronization procedures.

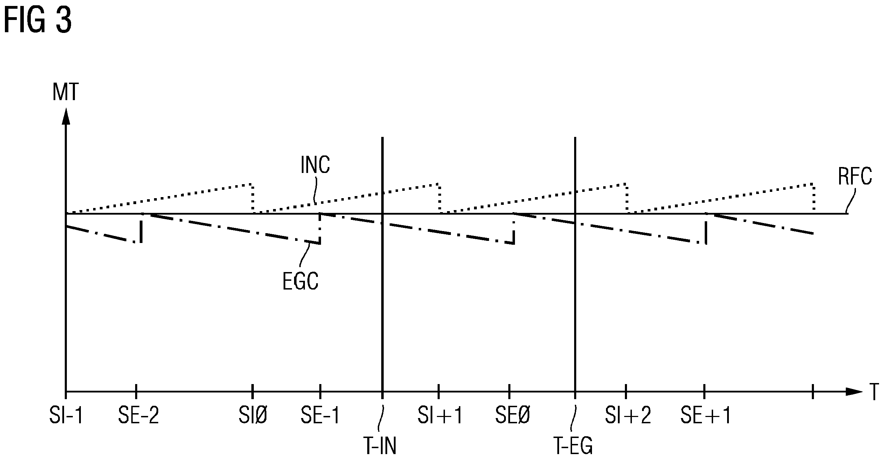

FIG. 3 shows a timing diagram in which the advancing time T is shown on the abscissa. The time INC measured at the first clock CL1 and the time EGC measured at a second clock CL2 are plotted to show the respective measured time MT.

A reference time RFC, which is plotted in parallel to the abscissa is defined by a master clock. If a local clock gradually deviates or drifts from this reference time RFC the measured time plot of such local clocks will continue by a linear increase or decrease, depending on whether the respective clock is ahead or behind the reference time RFC.

The time INC measured at the first clock CL1 as shown in FIG. 2 is used to generate a time stamp to be included in the synchronization message arriving at the ingress interface IP and is therefore also referred to as ingress time INC. The ingress time INC is shown as a dotted graph in the drawing.

The time EGC measured at the second clock CL2 is used to generate a time stamp to be included in the synchronization message leaving the egress interface EP and is therefore also referred to as egress time EGC. The egress time EGC is shown as a dash-dotted graph in the drawing.

In FIG. 3, the measured time plot of the ingress time INC and the egress time EGC respectively show a sawtooth shape which is to be interpreted as regular time drifts overtaking the reference time RFC or staying behind the reference time RFC, both ingress time INC and egress time EGC being synchronized with the reference time RFC in regular time intervals. Synchronizations with the reference time RFC form respective offsets shown as a respective jump discontinuity perpendicular to the ordinate.

A simplified behavior of the ingress time INC and the egress time INC compared to reference time RFC may be described as follows: The respective clocks determining ingress time INC and egress time EGC respectively drift relative to the reference time RFC of the master clock and also drift relative to each other. Periodically, the synchronization procedure adjusts the offset and re-synchronizes the clocks.

The following times are plotted along the on the abscissa:

- A time T-IN is the time of the ingress timestamp used for the residence time calculation. Hereinafter, this time T-IN may be also referred to by a formula expression $T_{ingress}$.

- A time SI0 is the first synchronization event at the ingress interface IP preceding the ingress time T-IN. Hereinafter, this time SI0 may be also referred to by a formula expression $T^i_{sync,ingress}$ meaning, in a more general approach, the time of the i-th synchronization event of the clock assigned to (or used by) the first ingress interface IP.

- A time SI+1 is assigned to a next synchronization event at the ingress interface IP succeeding the time SI0. Hereinafter, this time SI+1 may be also referred to by a formula expression $T^{i+1}_{sync,ingress}$.

- A time SI+2 is assigned to a next synchronization event at the ingress interface IP succeeding the time SI+1. Hereinafter, this time SI+2 may be also referred to by a formula expression $T^{i+2}_{sync,ingress}$.

- A time SI-1 is assigned to a synchronization event at the ingress interface IP preceding the time SI0. Hereinafter, this time SI-1 may be also referred to by a formula expression $T^{i-1}_{sync,ingress}$.

- A time T-EG is the time of the egress timestamp used for the residence time calculation. Hereinafter, this time T-EG may be also referred to by a formula expression $T_{egress}$.

- A time SE0 is the first synchronization event at the egress interface EP preceding the egress time T-EG. Hereinafter, this time SE0 may be also referred to by a formula expression $T^i_{sync,egress}$ meaning, in a more general approach, the time of the i-th synchronization event of the clock assigned to (or used by) the first egress interface EP.

- A time SE+1 is assigned to a next synchronization event at the egress interface EP succeeding the time SE0. Hereinafter, this time SE+1 may be also referred to by a formula expression $T^{i+1}_{sync,egress}$.

- A time SE-1 is assigned to a synchronization event at the egress interface EP preceding the time SE0. Hereinafter, this time SE-1 may be also referred to by a formula expression $T_{sync,egress}^{i-1}$.

- A time SE-2 is assigned to a synchronization event at the egress interface EP preceding the time SE-1. Hereinafter, this time SE+1 may be also referred to by a formula expression $T_{sync,egress}^{i-2}$.

On reception of the synchronization message by the ingress interface IP, an ingress timestamp is generated by the ingress interface IP, whereby a local ingress time is determined using a first clock CL1 assigned to the ingress interface IP.

Consequently, an adjusted ingress timestamp $T_{ingress}^{corrected}$ is calculated in order to compensate at least one of a time offset and a clock drift of the first clock in relation to a master clock. The adjusted ingress timestamp $T_{ingress}^{corrected}$ may be calculated using the following calculation rule:

$$T_{ingress}^{corrected} = T_{sync,ingress}^i - (T_{offset,ingress}^i - T_{offset,ingress}^{i-1}) + (T_{ingress} - T_{sync,ingress}^i + (T_{offset,ingress}^i - T_{offset,ingress}^{i-1})) * \frac{f_{GM}}{f_{ingress}}$$

Wherein $T_{offset,ingress}^i$ is a value of a time offset after the i-th synchronization event at the ingress interface.

Wherein $T_{offset,ingress}^{i-1}$ is a value of a time offset after the (i-1)-th synchronization event at the ingress interface IP.

The composed difference $T_{offset,ingress}^i - T_{offset,ingress}^{i-1}$ thus expresses a measure of the change in time offset between the time SI-1 and SI0 and, in FIG.3, corresponds to the edge length of the discontinuity in the ingress time INC at time SI0.

Wherein $\frac{f_{GM}}{f_{ingress}}$ expresses the rate ratio between a clock frequency $f_{GM}$ of the master clock or grand master (GM) clock, preferably a grand master clock in a 5G network, and a clock frequency $f_{ingress}$ of the first clock CL1 assigned to the ingress interface IP. Weighting with this rate ratio has the effect that the time expressed by the local ingress time is normalized to the time expressed by the master clock.

The adjusted ingress timestamp as calculated above compensates at least one time offset and a clock drift of the first clock in relation to the master clock. The adjusted ingress timestamp is then stored in the synchronization message.

Consequently or concurrently, a temporary correction factor may be determined using a section or field in the synchronization message which is provided for including the »cumulativeRateRatio« or CRR.

A correction factor $CRR^{n-1}$ may be extracted from the synchronization message. The factor $CRR^{n-1}$ is the cumulative rate ratio measured and stored in a node preceding the ingress node N1 of the current ingress interface IP along the route of the synchronization message. The node preceding the ingress node N1 may be a TSN node while the ingress node N1 may be a first node of the portion of the network which may be implemented as a 5G-as-a-TSN bridge. The correction factor $CRR^{n-1}$ extracted from the synchronization message may be used in the following calculation:

$$CRR_{temporary}^n = CRR^{n-1} * \frac{f^{n-1}}{f_{ingress}} * \frac{f_{ingress}}{f_{GM}}$$

$CRR_{temporary}^n$ being the adjusted temporary correction factor replacing the correction factor $CRR^{n-1}$ having been included in the synchronization message at the time of ingressing the ingress interface IP.

The adjusted temporary correction factor $CRR^n_{temporary}$ is adjusted by a first rate ratio $\dfrac{f^{n-1}}{f_{ingress}}$ expressing the rate ratio between a clock frequency $f^{n-1}$ of a node preceding the current ingress node N1 and a clock frequency $f_{ingress}$ of the first clock CL1 assigned to the ingress interface IP.

A second rate ratio $\dfrac{f_{ingress}}{f_{GM}}$ expresses the rate ratio between the clock frequency $f_{ingress}$ of the first clock CL1 and a clock frequency $f_{GM}$ of the master clock or grand master (GM) clock, preferably a grand master clock in the 5G network.

Weighting with these rate ratios has the effect that the adjusted temporary correction factor $CRR^n_{temporary}$ is adapted to express an adjustment until the current ingress node N1. The adjusted temporary correction factor $CRR^n_{temporary}$ is then stored in the synchronization message.

After the adjusted ingress timestamp and the adjusted temporary correction factor have been created and stored in the synchronization message, the synchronization message may continue to traverse through one or more nodes within the portion of a network considered here - for example a multiplicity of nodes associated to form 5G-as-a-TSN bridge - until the synchronization message finally arrives at a node N2 located on one edge of said network portion and comprising the egress interface EP.

At the egress interface EP the egress timestamp and the CRR are adjusted again. An adjusted egress timestamp $T^{corrected}_{egress}$ is calculated in order to compensate at least one of a time offset and a clock drift of the second clock in relation to a master clock. The adjusted egress timestamp $T^{corrected}_{egress}$ may be calculated using the following calculation rule:

$$T^{corrected}_{egress} = T^i_{sync,egress} - (T^i_{offset,egress} - T^{i-1}_{offset,egress}) + (T_{egress} - T^i_{sync,egress} + (T^i_{offset,egress} - T^{i-1}_{offset,egress})) * \frac{f_{5G,GM}}{f_{5G,egress}}$$

Wherein $T^i_{offset,egress}$ is a value of a time offset after the i-th synchronization event at the egress interface EP and wherein $T^{i-1}_{offset,egress}$ is a value of a time offset after the (i-1)-th synchronization event at the egress interface EP. The composed difference $T^i_{offset,egress} - T^{i-1}_{offset,egress}$ expresses a measure of the change in time offset between the time SE-1 and SE0 and, in FIG. 3, corresponds to the edge length of the discontinuity in the egress time EGC at time SE0.

The adjusted egress timestamp as calculated above may compensate at least one time offset and a clock drift of the second clock in relation to the master clock. The adjusted egress timestamp may consequently be stored in the synchronization message.

Consequently, the residence time may be determined as a difference of the adjusted egress timestamp $T^{corrected}_{egress}$ and the adjusted ingress timestamp $T^{corrected}_{ingress}$. The calculation may additionally include the temporary correction factor $CRR^n_{temporary}$ as mathematically expressed below:

$$T_{residence} = CRR^n_{temporary} * \left(T^{corrected}_{egress} - T^{corrected}_{ingress}\right)$$

The difference of the adjusted egress timestamp $T^{corrected}_{egress}$ and the adjusted ingress timestamp $T^{corrected}_{ingress}$ may be weighted by a cumulative rate ratio expressed by the temporary correction factor $CRR^n_{temporary}$, said

cumulative rate ratio being cumulatively multiplied by a respective rate ratio determined by at least one interface traversed by the synchronization message. The calculated residence time $T_{residence}$ may then be stored in the synchronization message.

Consequently, the temporary correction factor determined and stored by the preceding node - which may be, as explained above, the first node N1 including the ingress interface IP - may be adjusted again.

Hereby, the temporary correction factor $CRR^n_{temporary}$ may have been extracted from the synchronization message and saved in a memory. The temporary correction factor $CRR^n_{temporary}$ is the cumulative rate ratio measured and stored in a node preceding the egress node N2 of the current egress interface EP along the route of the synchronization message. The temporary correction factor $CRR^n_{temporary}$ extracted from the synchronization message may be used in the following calculation:

$$CRR^n = CRR^n_{temporary} * \frac{f^{GM}}{f_{egress}}$$

$CRR^n$ being the adjusted correction factor replacing the temporary correction factor $CRR^n_{temporary}$ having been included in the synchronization message at the time of ingressing the egress interface EP.

The adjusted correction factor $CRR^n$ is adjusted by a first rate ratio $\frac{f^{GM}}{f_{egress}}$ expressing the rate ratio between a clock frequency $f_{GM}$ of the master clock or grand master (GM) clock, preferably a grand master clock in the 5G network and a clock frequency $f_{egress}$ of the second clock CL2 assigned to the egress interface EP.

Weighting with this rate ratio has the effect that the adjusted correction factor $CRR^n$ is adapted to express an adjustment until the current egress node N1. The adjusted correction factor $CRR^n$ may then be stored in the synchronization message.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

**Claims**

1. A method for determining a residence time of a synchronization message traversing a portion of a network, said method comprising:

   a) generating an ingress timestamp by an ingress interface corresponding to a local ingress time at which the synchronization message is received by the ingress interface, whereby said local ingress time is determined using a first clock assigned to the ingress interface;
   b) calculating an adjusted ingress timestamp compensating at least one of a time offset and a clock drift of the first clock in relation to a master clock and storing the adjusted ingress timestamp in the synchronization message;
   c) generating an egress timestamp by an egress interface corresponding to a local egress time at which the synchronization message is egressed by the egress interface, whereby said local egress time is determined using a second clock assigned to the egress interface;
   d) calculating an adjusted egress timestamp compensating at least one of a time offset and a clock drift of the second clock in relation to the master clock and storing the adjusted egress timestamp in the synchronization message;

e) determining the residence time as a difference of the adjusted egress timestamp and the adjusted ingress timestamp.

2. The method of claim 1, wherein said difference is weighted by a cumulative rate ratio, said cumulative rate ratio being cumulatively multiplied by a respective rate ratio determined by at least one interface traversed by the synchronization message.

3. The method of claim 1, wherein calculating the adjusted ingress timestamp includes summing up a time of a synchronization event imposed to the first clock by a term at least including the local ingress time and a time offset caused by the synchronization event occurring at the first clock, said term being multiplied by a ratio between a clock frequency of the master clock and a clock frequency of the first clock assigned to the ingress interface.

4. The method of claim 1, wherein calculating the adjusted egress timestamp includes summing up a time of a synchronization event imposed to the second clock by a term at least including the local egress time and a time offset caused by the synchronization event occurring at the second clock, said term being multiplied by a ratio between a clock frequency of the master clock and a clock frequency of the second clock assigned to the egress interface.

5. The method of claim 1, wherein the synchronization message is a Precision Time Protocol or PTP message.

6. The method of claim 1, wherein the portion of said network is a fifth generation or 5G communication network.

7. The method of claim 1, wherein the portion of said network is a time sensitive network or TSN.

8. The method of claim 1, wherein the portion of said network is a 5G-as-a-TSN bridge and wherein the network is a 5G-TSN integrated network.

9. The method of claim 1, wherein the portion of said network is implemented as a logical time sensitive network or logical TSN bridge.

10. A system for determining a residence time of a synchronization message traversing a portion of a network, said method comprising:

a) an ingress interface for receiving said synchronization message, for generating an ingress timestamp corresponding to a local ingress time at which the synchronization message is received by the ingress interface, whereby said local ingress time is determined using a first clock assigned to the ingress interface, for calculating an adjusted ingress timestamp compensating at least one of a time offset and a clock drift of the first clock in relation to a master clock and storing the adjusted ingress timestamp in the synchronization message and for forwarding the synchronization message to one or more nodes;

b) an egress interface for receiving said synchronization message, for generating an egress timestamp corresponding to a local egress time at which the synchronization message is egressed by the egress interface, whereby said local egress time is determined using a second clock assigned to the egress interface, for calculating an adjusted egress timestamp compensating at least one of a time offset and a clock drift of the second clock in relation to the master clock and storing the adjusted egress timestamp in the synchronization message and for determining the residence time as a difference of the adjusted egress timestamp and the adjusted ingress timestamp.

FIG 1

FIG 2

EP 4 160 947 A1

# FIG 3

MT

INC

RFC

EGC

SI-1  SE-2  SIØ  SE-1  SI+1  SEØ  SI+2  SE+1  T

T-IN  T-EG

| | | Europäisches Patentamt<br>European Patent Office<br>Office européen des brevets | **EUROPEAN SEARCH REPORT** | **Application Number**<br>EP 21 20 0036 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STRIFFLER TOBIAS ET AL: "The 5G Transparent Clock: Synchronization Errors in Integrated 5G-TSN Industrial Networks", 2021 IEEE 19TH INTERNATIONAL CONFERENCE ON INDUSTRIAL INFORMATICS (INDIN), IEEE, 21 July 2021 (2021-07-21), pages 1-6, XP033987375, DOI: 10.1109/INDIN45523.2021.9557468 [retrieved on 2021-10-01] * page 2, column 1 - page 6, column 1 * ----- | 1-10 | INV.<br>H04J3/06<br>H04L12/46<br>H04L47/28 |
| X | SCHUNGEL MAXIMILIAN ET AL: "Single Message Distribution of Timing Information for Time Synchronization in Converged Wired and Wireless Networks", 2020 25TH IEEE INTERNATIONAL CONFERENCE ON EMERGING TECHNOLOGIES AND FACTORY AUTOMATION (ETFA), IEEE, vol. 1, 8 September 2020 (2020-09-08), pages 286-293, XP033835648, DOI: 10.1109/ETFA46521.2020.9211936 [retrieved on 2020-10-02] | 1,5-10 | |
| A | * page 287, column 1 - page 288, column 1 * <br><br>* page 289, column 1 - page 291, column 2 * <br><br>----- <br><br>-/-- | 2-4 | TECHNICAL FIELDS SEARCHED (IPC)<br>H04J<br>H04L |

The present search report has been drawn up for all claims

| Place of search | Date of completion of the search | Examiner |
|---|---|---|
| The Hague | 9 March 2022 | Marongiu, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 21 20 0036

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Services and System Aspects; Study on enhanced support of Industrial Internet of Things (IIoT) in the 5G System (5GS) (Release 17)", 3GPP DRAFT; SP-210102.ZIP 23700-20-DIFF_V100-V200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 March 2021 (2021-03-16), XP051988119, Retrieved from the Internet: URL:https://ftp.3gpp.org/tsg_sa/TSG_SA/TSGs_91E_Electronic/Docs/SP-210102.zip 23700-20-Diff_v100-v200.zip 23700-20-Diff_v100-v200.docx [retrieved on 2021-03-16] * section 6.1.2 * * sections 6.1.3.1-6.1.3.2 * ----- | 1-10 | |

TECHNICAL FIELDS
SEARCHED (IPC)

The present search report has been drawn up for all claims

| Place of search | Date of completion of the search | Examiner |
|---|---|---|
| The Hague | 9 March 2022 | Marongiu, M |

EPO FORM 1503 03.82 (P04C01)

**page 2 of 2**

EP 4 160 947 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21168513

**Non-patent literature cited in the description**

- Draft Standard for a Precision Clock Synchronization Protocol for Networked Measurement and Control Systems. August 2019

- Draft Standard for a Precision Clock Synchronization Protocol for Networked Measurement and Control Systems. draft document D1.6. August 2019